# EUROPÄISCHE PATENTSCHRIFT

(11) **EP 3 580 035 B1**
(45) Veröffentlichungstag und Bekanntmachung des Hinweises auf die Patenterteilung: **15.12.2021**
(21) Anmeldenummer: 18705138.8
(22) Anmeldetag: 13.02.2018
(51) Int. Cl.: B29C 49/48, B29C 49/06, B29C 49/12, B29C 49/36, B29L 31/00

(54) **VORRICHTUNG UND VERFAHREN ZUM UMFORMEN VON KUNSTSTOFFVORFORMLINGEN ZU KUNSTSTOFFFLASCHEN MIT BEWEGLICHEM BODENTEIL**
DEVICE AND METHOD FOR TRANSFORMING PLASTIC PREFORMS INTO PLASTIC BOTTLES WITH A MOVEABLE BASE
DISPOSITIF ET PROCÉDÉ POUR TRANSFORMER DES PRÉFORMES EN MATIÈRE PLASTIQUE EN BOUTEILLES EN MATIÈRE PLASTIQUE COMPRENANT UNE PARTIE FOND MOBILE

(30) Priorität: 13.02.2017 DE 102017102837
(43) Veröffentlichungstag der Anmeldung: 18.12.2019
(73) Patentinhaber: Krones AG, 93073 Neutraubling (DE)
(72) Erfinder: PENSE, Andreas, 93073 Neutraubling (DE); PHILIPP, Thomas, 93073 Neutraubling (DE); HÜTTNER, Gerald, 93073 Neutraubling (DE); FINGER, Dieter, 93073 Neutraubling (DE); STEINER, Andreas, 93073 Neutraubling (DE)
(74) Vertreter: Bittner, Bernhard
(86) Internationale Anmeldenummer: PCT/EP2018/053540
(87) Internationale Veröffentlichungsnummer: WO 2018/146331

(56) Entgegenhaltungen:
- WO-A1-2016/083711
- FR-A1- 3 027 248
- FR-A1- 3 029 133
- US-A1- 2013 224 325
- US-A1- 2014 145 378
- US-A1- 2017 021 550
- US-A1- 2017 036 389

## Beschreibung

Die vorliegende Erfindung bezieht sich auf eine Umformungseinrichtung zum Umformen von Kunststoffvorformlingen zu Kunststoffbehältnissen und ein entsprechendes Umformungsverfahren. Derartige Vorrichtungen und Verfahren sind aus dem Stand der Technik seit Langem bekannt. Dabei werden üblicherweise Kunststoffvorformlinge in eine Blasform eingegeben und durch Beaufschlagung mit Blasdruck zu Kunststoffflaschen geblasen. Aus dem Stand der Technik sind dabei unterschiedlichste Verfahren bekannt. So sind in jüngerer Zeit auch Verfahren bekannt geworden, bei denen während der Expansion des Kunststoffvorformlings zu dem Kunststoffbehältnis ein Bodenteil der Blasform bewegt wird, um beispielsweise gezielt Knicke in den herzustellenden Behältnissen bzw. deren Böden zu erreichen. Derartige Verfahren werden im Stand der Technik teilweise auch als Active Base Verfahren bezeichnet. Diese Verfahren und entsprechende Vorrichtungen haben sich bewährt, es tritt jedoch teilweise das Problem auf, dass eine genaue Steuerung der entsprechenden Behältnisherstellung nur sehr schwierig ist.

Die Dokumente US2017/036389A1, US2017/021550A1, FR3029 133A1, US2013/224325A1, WO2016/083711 und US2014/145378A1 beschreiben aus dem Stand der Technik bekannten Umformungseinrichtungen die den technischen Hintergrund der vorliegende Erfindung widergeben.

Der vorliegenden Erfindung liegt daher die Aufgabe zu Grunde, eine Vorrichtung und ein Verfahren zur Verfügung zu stellen, welche eine genauere Steuerung der jeweiligen Blasprozesse ermöglichen. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Umformungseinrichtung zum Umformen von Kunststoffvorformlingen zu Kunststoffbehältnissen und insbesondere Kunststoffflaschen weist eine Blasform auf, welche ein erstes Seitenteil und ein zweites Seitenteil sowie ein Bodenteil aufweist. Dabei bilden diese Seitenteile sowie das Bodenteil einen Hohlraum aus, innerhalb dessen die Kunststoffvorformlinge zu den Kunststoffflaschen umformbar sind, wobei das Bodenteil in einem geschlossenen Zustand der Blasform gegenüber den Seitenteilen bewegbar ist und wobei die Umformungseinrichtung weiterhin eine Antriebseinrichtung aufweist, um das Bodenteil gegenüber den Seitenteilen zu bewegen. Weiterhin weist die Antriebseinrichtung bevorzugt ein bewegliches Kolbenelement auf, welches innerhalb eines vorgegebenen Hubwegs bewegbar ist.

Erfindungsgemäß weist die Vorrichtung ein erstes Hubwegsbegrenzungsmittel auf, welches die Hubbewegung bzw. den Hubweg des Bodenteils und/oder des Kolbenelements in einer ersten Richtung begrenzt, wobei dieses Hubwegsbegrenzungsmittel verstellbar ist, um den Hubweg zu verändern. Bevorzugt weist die Vorrichtung, wie oben erwähnt, ein Kolbenelement auf, welches bevorzugt mechanisch mit dem Bodenteil gekoppelt ist, insbesondere in der Weise, dass sich das Bodenteil und das Kolbenelement miteinander bewegen. Es wäre jedoch auch denkbar, auf das besagte Kolbenelement zu verzichten, insbesondere wenn es sich bei der Antriebseinrichtung um eine elektrisch betriebene Antriebseinrichtung handelt.

Unter einem geschlossenen Zustand der Blasform wird insbesondere ein Zustand verstanden, in dem die beiden Seitenteile mit dem Bodenteil den besagten Hohlraum ausbilden, der zum Expandieren der Kunststoffvorformlinge dient. Bevorzugt handelt es sich daher bei dem geschlossenen Zustand um einen Zustand, in dem die Kunststoffvorformlinge durch Beaufschlagung mit Druckluft expandiert werden.

Es wird daher eine Vorrichtung vorgeschlagen, bei der der Hubweg des Bodenteils gegenüber den Seitenteilen einstellbar ist. Auf diese Weise können bessere produzierbare Ergebnisse während des Blasformvorgangs erzielt werden. Auch ist es möglich, bei einer Vorrichtung mit einer Vielzahl von Umformungsstationen derartige Begrenzungen individuell einzustellen.

Bei einer bevorzugten Ausführungsform weist die Vorrichtung einen Träger auf, an dem eine Vielzahl der genannten Blasformen bzw. Umformungseinrichtungen angeordnet ist. Vorteilhaft handelt es sich hierbei um einen drehbaren Träger. Bei einer weiteren vorteilhaften Ausführungsform weist jede dieser Umformungseinrichtungen ein Bodenteil auf, welches in einem geschlossenen Zustand der Blasformen gegenüber den Seitenteilen bewegbar ist. Bei einer vorteilhaften Ausführungsform sind die beiden Seitenteile bezüglich einander bewegbar, bevorzugt bezüglich einander schwenkbar und besonders bevorzugt bezüglich einander bezüglich einer Schwenkachse schwenkbar, welche parallel zu einer Längsachse der zu expandierenden Kunststoffvorformlinge verläuft.

Bei einer weiteren bevorzugten Ausführungsform ist das Bodenteil der Blasform an einem Träger angeordnet und insbesondere lösbar angeordnet. Dieser Träger ist wiederum bevorzugt durch einen Antrieb bewegbar. Bei einer weiteren vorteilhaften Ausführungsform sind die Seitenteile zumindest mittelbar an Seitenteilträgern angeordnet. Besonders bevorzugt sind an den Seitenteilträgern Trägerschalen angeordnet und an diesen Trägerschalen wiederum bevorzugt die Seitenteile der Blasformen.

Bei einer weiteren vorteilhaften Ausführungsform weist die Umformungseinrichtung Druckmittelanschlüsse auf, um den Kolben mittels Luftdruck zu bewegen. Bei dieser Ausgestaltung wird also ein pneumatisches Betätigen des Kolbenelements und/oder des Bodenteils vorgeschlagen. Es wäre jedoch auch möglich, dass die Antriebseinrichtung eine elektromotorische Antriebseinrichtung ist. In diesem Falle wäre es auch möglich, auf das besagte Kolbenelement zu verzichten.

Vorteilhaft weist die Vorrichtung eine Beaufschlagungseinrichtung auf, um den Kunststoffvorformling mit Luftdruck zu beaufschlagen. Insbesondere handelt es sich hierbei um eine sog. Blasdüse, welche an eine Mündung der Kunststoffvorformlinge anlegbar ist, um diese mit Druckluft zu beaufschlagen. Vorteilhaft erfolgt dabei eine Beaufschlagung mit unterschiedlichen Luftdrücken. So wäre es möglich, dass der Kunststoffvorformling zunächst mit einem Vorblasdruck beaufschlagt wird und anschließend mit einem Zwischenblasdruck und schließlich mit einem Fertigblasdruck. Vorteilhaft ist dabei eine Vielzahl von Ventilen vorgesehen, welche die einzelnen Drücke zur Verfügung stellen.

Bevorzugt weist die Vorrichtung wenigstens ein Reservoir und bevorzugt mehrere Reservoirs auf, um die Druckluft zum Expandieren der Kunststoffvorformlinge zur Verfügung zu stellen. Diese Reservoirs können dabei auch Druckluft mit unterschiedlichen Druckniveaus zur Verfügung stellen. Bevorzugt ist dabei wenigstens eines dieser Reservoirs und sind besonders bevorzugt mehrere dieser Reservoirs als Ringkanäle ausgeführt.

Weiterhin weist die Vorrichtung bevorzugt eine Steuerungseinrichtung auf, welche diese einzelnen Ventileinrichtungen ansteuert. So kann das Behältnis wie oben erwähnt nacheinander mit den jeweiligen Drücken beaufschlagt werden.

Bevorzugt weist die Vorrichtung eine Erfassungseinrichtung auf, welche dazu geeignet und bestimmt ist, wenigstens einen Messwert aufzunehmen, der für die Bewegung des Bodenteils charakteristisch ist. Auch bei dieser erfindungsgemäßen Ausgestaltung wird eine bessere Anpassung der einzelnen Verfahrwege erreicht. Allerdings erfolgt dies hier über eine Bestimmung der Bewegung des Kolbens bzw. des Bodenteils. Vorteilhaft handelt es sich hierbei um einen Messwert, der aus einer Gruppe von Messwerten ausgewählt ist, welche eine Verfahrensposition, eine Geschwindigkeit, eine Hubhöhe und dergleichen enthält. Daneben können jedoch durch die Erfassungseinrichtung auch Schwingungen, Vibrationen und dergleichen aufgenommen werden.

Es wird darauf hingewiesen, dass die hier beschriebene Erfassungseinrichtung auch unabhängig von der Ausgestaltung des Hubwegbegrenzungsmittels Anwendung finden kann. Die Anmelderin behält sich daher vor, Schutz zu beanspruchen für eine Umformungseinrichtung zum Umformen von Kunststoffvorformlingen zu Kunststoffbehältnissen und insbesondere Kunststoffflaschen welche eine Blasform aufweist, welche ein erstes Seitenteil und ein zweites Seitenteil sowie ein Bodenteil aufweist. Dabei bilden diese Seitenteile sowie das Bodenteil einen Hohlraum aus, innerhalb dessen die Kunststoffvorformlinge zu den Kunststoffflaschen umformbar sind, wobei das Bodenteil in einem geschlossenen Zustand der Blasform gegenüber den Seitenteilen bewegbar ist und wobei die Umformungseinrichtung weiterhin eine Antriebseinrichtung aufweist, um das Bodenteil gegenüber den Seitenteilen zu bewegen. Weiterhin weist die Antriebseinrichtung bevorzugt ein bewegliches Kolbenelement auf, welches innerhalb eines vorgegebenen Hubwegs bewegbar ist.

Erfindungsgemäß weist die Vorrichtung eine Erfassungseinrichtung auf, welche dazu geeignet und bestimmt ist, wenigstens einen Messwert aufzunehmen, der für die Bewegung des Bodenteils charakteristisch ist.

So ist es bevorzugt möglich, dass eine Stellung des Bodenteils oder des Kolbenelements bzw. eines Zylinders für die Betätigung des Bodenteils abgefragt wird, etwa mit Hilfe von Erfassungseinrichtungen bzw. Sensoren abgefragt wird. Bei diesen Erfassungseinrichtungen kann es sich beispielsweise um Mikroschalter, induktive Näherungsschalter, Lichtschranken oder andere elektronische oder elektromechanische Bauteile handeln. Daneben oder zusätzlich wäre es auch möglich, dass eine digitale Abfrage bestimmter Positionen des Bodenteils erfolgt, bevorzugt eine obere und/oder eine untere Endlage. Daneben ist auch eine analoge stufenlose Abfrage des Bodenteils oder Zylinders, etwa über ein Wegmesssystem möglich. Auf diese Weise kann über den gesamten Verfahrweg jederzeit die aktuelle Position ermittelt werden. Bevorzugt kann eine Anbindung an eine Steuerungseinrichtung über eine digitale Schnittstelle erfolgen. Dabei ist es möglich, dass bei jeder einzelnen Umformungsstation jeweils ein Sollverfahrprofil mit einem Istverfahrprofil verglichen wird.

Vorteilhaft weist die Vorrichtung eine Steuerungseinrichtung auf, welche die Umformungseinrichtung in Reaktion auf diese Daten steuert. Auf diese Weise kann insbesondere die Hubbewegung des Bodenteils genauer gesteuert werden, auch im Hinblick insbesondere auf ein Anfahren der jeweiligen Anschläge.

Insgesamt kann so eine genauere Steuerung und Überwachung des Arbeitsprozesses auch bei einer Vielzahl von Einheiten vorgenommen werden. Daneben kann auch das Gewicht der bewegten Bauteile minimiert werden. Daneben ist es auch möglich, den Verschleiß an den Medienzuführungen zu reduzieren. Auch ist es möglich, die einzelnen Arbeitszyklen der Bodenhubeinheiten zueinander zu synchronisieren. Auf diese Weise kann ein genauerer Arbeitsprozess erreicht werden. Daneben kann auch die Hubhöhe an die Behältergeometrie bzw. an spezielle Behältniseigenschaften angepasst werden.

Bei einer weiteren vorteilhaften Ausführungsform weist die Vorrichtung eine Druckkammer auf, um den Kolben mit einem Druckmedium zu beaufschlagen und bevorzugt ist das Hubbegrenzungsmittel außerhalb dieser Druckkammer angeordnet.

Bei einer bevorzugten Ausführungsform ist das Hubwegbegrenzungsmittel unterhalb der besagten Druckkammer angeordnet. Dies gilt insbesondere bei Ausgestaltungen, bei denen die Kunststoffvorformlinge in einer aufrecht stehenden Position geblasen werden.

Bei einer weiteren vorteilhaften Ausführungsform ist das Hubwegbegrenzungsmittel in der Bewegungsrichtung des Kolbens einstellbar. Auf diese Weise kann wenigstens eine Endposition des besagten Kolbens verändert werden. So wäre es möglich, dass der Kolben prinzipiell bis zu einer bestimmten Maximalhöhe, beispielsweise von ca. 20 mm bewegt werden kann. Bevorzugt ist jedoch eine Bewegung bis 14,9 mm und 19,8 mm und bevorzugt zwischen 17 und 19 mm möglich. Um diese Hubhöhe einstellen zu können und insbesondere mechanisch einstellen zu können, können die besagten Hubwegbegrenzungsmittel verstellt werden. Vorteilhaft handelt es sich bei den Hubwegbegrenzungsmitteln um Anschläge, welche besonders bevorzugt manuell verändert werden können.

So ist es bei einer bevorzugten Ausführungsform möglich, dass zum Zweck der Einstellbarkeit Mittel, welche den Hubweg begrenzen eingetauscht werden. So kann beispielsweise das Hubwegbegrenzungsmittel eine Halterung zum Halten einer Anschlagscheibe und diese Anschlagscheibe aufweisen. Zum Einstellen des Hubwegs kann diese Anschlagscheibe gegen eine andere Anschlagscheibe, etwa eine Anschlagscheibe mit einer geringeren Dicke eingetauscht werden. Auch könnten mehrere derartiger Anschlagscheiben übereinander angeordnet werden.

Vorteilhaft werden der/die Anschlag/Anschläge durch einen Anschlag/Anschläge mit einer veränderten Höhe getauscht, um den Hubweg manuell zu verlängern. Um den Hubweg zu verringern, werden der oder die Anschläge wiederum gegen einen oder mehrere Anschläge getauscht, welche eine verringerte Höhe aufweisen. Es ist auch denkbar, mehrere Anschläge übereinander anzuordnen um den entsprechend gewünschten Hubweg einzustellen. Wie erwähnt liegen diese Anschläge dabei bevorzugt außerhalb und besonders bevorzugt unterhalb einer Druckkammer. Die Einstellbarkeit der Höhe ist dabei in unterschiedlicher Weise möglich. So können beispielsweise unterschiedliche Anschlagformen eingesetzt werden oder es können zusätzlich Unterlegscheiben und/oder Plättchen Anwendung finden.

Wie oben erwähnt ist bevorzugt auch eine Positionserfassungseinrichtung wie insbesondere ein Sensor vorhanden, der relevante Daten, wie beispielsweise eine Verfahrhöhe, eine Bodenposition, eine Verfahrgeschwindigkeit und ähnliche relevante Daten wie Schwingungen, Vibrationen und Mikrobewegungen aufzeichnet. Daneben kann durch die Ermittlung dieser genannten Daten auch eine Prozesszeit ausgelesen werden bzw. genau bestimmt und geregelt werden, um eine gleichartige bzw. symmetrische Arbeitszeit einzelner Umformungseinrichtungen zueinander zu gewährleisten.

Bevorzugt können auf diese Weise die einzelnen Umformungsstationen einer Anlage so eingestellt werden, dass in etwa oder genau die gleiche Arbeitszeit benötigt wird, um einen Arbeitszyklus zu vollziehen bzw. zu durchlaufen. Bei einer weiteren vorteilhaften Ausführungsform weist die Umformungseinrichtung wenigstens einen ersten Temperiermittelanschluss auf, um das Bodenteil mittels eines fließfähigen Temperiermittels zu temperieren. Vorteilhaft handelt es sich hierbei um ein flüssiges Temperiermittel. Auf diese Weise kann das Bodenteil der Blasform in genau gewünschter Weise temperiert werden bzw. eine genau gewünschte Temperatur aufweisen. Bevorzugt weist die Umformungseinrichtung auch einen zweiten Temperiermittelanschluss auf, der insbesondere als Abfluss ausgeführt sein kann. Auf diese Weise kann ein Kühlmittelkreislauf an das Bodenteil angelegt werden.

Dabei ist es möglich, dass dieses Temperiermittel dem Bodenteil oder dessen Träger zugeführt wird. Auf diese Weise können insgesamt Temperierkreisläufe zur Verfügung gestellt werden.

Bei einer weiteren vorteilhaften Ausführungsform ist wenigstens ein Temperiermittelanschluss derart positioniert, dass er eine möglichst geringe Hubbewegung durchführen muss. So könnte beispielsweise ein Temperiermittelanschluss in der Mitte zwischen einer oberen und einer unteren Position des Bodenteils angelegt sein, um keine allzu hohen Ausschläge bzw. Richtungsänderungen durchführen zu müssen.

Bei einer weiteren vorteilhaften Ausführungsform weist die Umformungseinrichtung ein zweites Hubwegbegrenzungsmittel auf, welches die Hubbewegung des Kolbenelements in einer zweiten Richtung begrenzt, wobei bevorzugt dieses Hubbegrenzungsmittel verstellbar ist, um den Hubweg zu verändern. Auf diese Weise kann der Hubweg des Bodenteils bzw. des Kolbens in beiden Richtungen eingestellt werden. So kann eine Minimalhöhe und eine Maximalhöhe vorgegeben werden. Auch hierdurch wird eine genauere Regelung des Umformungsvorgangs und insbesondere der Erzeugung des Bodenbereichs des Behältnisses erreicht.

Bei einer weiteren vorteilhaften Ausführungsform weist eine Antriebseinrichtung zum Bewegen des Bodenteils eine Drosseleinrichtung auf, um die Bewegung des Bodenteils zu drossein. Durch diese Drosseleinrichtung ist eine sehr präzise Bewegung des Bodenteils möglich. Vorteilhaft handelt es sich daher bei der Antriebseinrichtung um eine pneumatische Antriebseinrichtung. Bei einer weiteren vorteilhaften Ausführungsform wird eine elektronische Drosseleinrichtung, insbesondere in Form eines Drosselventils, verwendet, um die Verfahrbewegung noch genauer einstellen oder regeln oder auch überwachen zu können. Dabei kann insbesondere auch eine Bewegungsgeschwindigkeit bzw. eine Hubhöhe eingestellt werden.

Insgesamt kann auf die beschriebene Weise eine genauere Steuerung und Überwachung des Arbeitsprozesses der einzelnen Einheiten erreicht werden. Auch kann auf diese Weise ein Gewicht der bewegten Bauteile reduziert werden. Daneben wird auch der Verschleiß an den Medienzuführungen verringert. Daneben können auch die einzelnen Arbeitszyklen der Bodenhubeinheiten zueinander besser synchronisiert werden, wodurch ein genauerer Arbeitsprozess erreicht wird. Vorteilhaft kann auch eine anpassbare Hubhöhe an die Behältnisgeometrie bzw. die Behältniseigenschaften erreicht werden.

Insgesamt wird durch die Erfindung auch die Aufgabe gelöst, eine konstantere und auch gleichbleibendere Schaltzeit sicherzustellen. Generell muss nämlich zwischen unterschiedlichen Stationen mit einer gewissen Streuung gerechnet werden. Die unterschiedlichen Zeitpunkte der Aufwärtsbewegung sowie die unterschiedliche Verfahrgeschwindigkeit des Formbodens mindern die gleichbleibende Qualität der herzustellenden Behältnisse.

Die vorliegende Erfindung ist weiterhin auf ein Verfahren zum Umformen von Kunststoffvorformlingen zu Kunststoffbehältnissen und insbesondere Kunststoffflaschen gerichtet. Dabei wird in einem ersten Verfahrensschritt ein Kunststoffvorformling in eine Blasform eingegeben, wobei diese Blasform wenigstens zwei Seitenteile aufweist, sowie ein Bodenteil, welche gemeinsam einen Hohlraum begrenzen, innerhalb dessen der Kunststoffvorformling expandierbar ist.

In einem weiteren Verfahrensschritt wird der Kunststoffvorformling mit einem ersten Druck beaufschlagt. In einem weiteren Verfahrensschritt wird der Kunststoffvorformling mit einem zweiten Druck beaufschlagt, der von dem ersten Druck abweicht und bevorzugt größer ist als der erste Druck. In einem weiteren Verfahrensschritt wird der Kunststoffvorformling mit einem dritten Druck beaufschlagt, der von dem ersten Druck und/oder dem zweiten Druck abweicht und bevorzugt größer ist als dieser erste Druck und/oder der zweite Druck.

Weiterhin wird das Bodenteil wenigstens einmal während der Expansion auf den Kunststoffvorformling zugestellt.

Erfindungsgemäß weist die Vorrichtung ein erstes Hubwegbegrenzungsmittel auf, welches die Hubbewegung des Bodenteils in einer ersten Richtung begrenzt, wobei dieses Hubwegbegrenzungsmittel verstellbar ist, um den Hubweg zu verändern.

Bei einer weiteren alternativen Ausgestaltung des Verfahrens kann kumulativ oder alternativ mittels einer Erfassungseinrichtung wenigstens ein Messwert aufgenommen werden, der für die Bewegung des Bodenteils charakteristisch ist.

Bei den beiden hier vorgeschlagenen Varianten wird jeweils die Aufgabe erreicht, eine genauere Steuerung der Bodenteilsbewegung zu erreichen. Auch kann auf diese Weise eine genauere Anpassung unterschiedlicher Umformungsstationen vorgenommen werden.

Bei einer weiteren erfindungsgemäßen Ausgestaltung, die zusätzlich oder alternativ zu den oben bezeichneten Varianten durchgeführt oder angewandt werden kann, wird eine Bewegung des Bodenteils im Wesentlichen gleichzeitig mit der Beaufschlagung wenigstens eines der genannten Drücke aktiviert.

Bei einem bevorzugten Verfahren erfolgt die Beaufschlagung der Behältnisse mit den jeweiligen Drücken durch Schalten von entsprechenden Ventilen. So kann die Beaufschlagung der Kunststoffvorformlinge mit dem ersten Druck durch Öffnen eines ersten Ventils erreicht werden. Bevorzugt kann auch die Beaufschlagung des Kunststoffvorformlings mit dem zweiten Druck durch das Öffnen eines zweiten Ventils erreicht werden. Dabei kann das erste Ventil wieder geschlossen werden oder auch geöffnet bleiben. Bevorzugt erfolgt auch die Beaufschlagung des Kunststoffvorformlings mit dem dritten Druck durch Öffnen eines entsprechenden Ventils.

Durch die oben beschriebene erfindungsgemäße Anpassung oder Schaltung des Bodenteils kann ebenfalls das Verfahren vereinfacht werden. Vorteilhaft wird die Bodenteilbewegung eingeleitet innerhalb eines Zeitraums, welcher zwischen maximal plus oder minus 10 % von dem Zeitpunkt der Schaltung des zweiten Drucks bzw. der Beaufschlagung mit dem zweiten Druck abweicht. Vorteilhaft ist dieses Zeitfenster kleiner als 10 %. Bevorzugt bleibt das Bodenteil in seiner Höchstposition, das heißt einer auf den Kunststoff zugestellten Position bis kurz vor dem Öffnen der Blasform oder in jedem Falle bzw. bevorzugt bis der entsprechende zweite Druck wieder im Wesentlichen aus dem Behältnis entwichen ist bzw. ausgeleitet wurde.

Bevorzugt ist es mit dem oben genannten Verfahren auch möglich, bei jeder einzelnen Umformungsstation jeweils Soll-Verfahrprofile mit Ist-Vefahrprofile zu vergleichen. So kann beispielsweise die Zeit gemessen werden, welche zwischen einem elektrischen Schaltsignal eines Pneumatikventils bis zur Betätigung einer Sensoreinrichtung verstreicht. Durch diesen Vergleich von Soll- und Ist-Verfahrprofil kann jeweils ein Vorhalt für einen Blasprozess in der nächsten Blasrunde ermittelt werden. Falls die gewünschte Position zu spät erreicht wird, kann etwa ein Pneumatikventil für das Bodenteil früher geschalten werden. Falls eine gewünschte Position zu früh erreicht wird, kann umgekehrt ein Pneumatikventil später geschalten werden.

Mit diesem Verfahren können auch einzelne Umformungsstationen aneinander angeglichen werden und es kann auch ein langsames Wegdriften beispielsweise durch Einlaufen kompensiert werden.

Selbst wenn aus technischen Gründen nicht immer sichergestellt werden kann, dass die Bodenteile immer gleich schnell verfahren (z.B. auf Grund unterschiedlicher Regelungen). Die hier vorgeschlagene Regelung bezieht sich daher bevorzugt auf eine bestimmte Position des Verfahrprofils des Bodenteils. So kann beispielsweise die Regelung dahingehend erfolgen, dass eine Startposition des Bodenteils immer zum gleichen Zeitpunkt verlassen wird. Alternativ oder auch zusätzlich kann eine Regelung dahingehend erfolgen, dass die Endposition des Bodenteils immer zum gleichen Zeitpunkt erreicht wird. Daneben wäre es auch möglich, dass eine beliebige parametrierbare Zwischenposition des Bodenteils immer zum gleichen Zeitpunkt durchfahren wird. Bei dieser Zwischenposition kann es sich beispielsweise um eine Position zwischen einer Start- und der Endposition des Bodenteils handeln und bevorzugt um eine Position in der Mitte zwischen der Startposition und der Endposition.

Auf diese Weise kann auch schon in einer ersten Runde nach einem längeren Stillstand die Behältnisqualität erreicht werden. So wäre es auch möglich, dass in einem Kalibrierbetrieb die Bodenteile vor dem Einlaufen der ersten Kunststoffvorformlinge für eine Runde leer betätigt werden und die Verzögerungszeiten gemessen werden. Dies kann erfolgen, da üblicherweise die letzte Messung zu lange zurück liegt und sich die zweiten durch den Standby-Betrieb eventuell zusätzlich verändert haben.

Bei einem weiteren vorteilhaften Verfahren wird auf Basis des aufgenommenen Messwerts die Zustellbewegung des Bodenteils auf den Kunststoffvorformling gesteuert und/oder geregelt. Bei dieser Ausgestaltung wird insbesondere ein Verfahren vorgeschlagen, bei welchem der aufgenommene Messwert insbesondere auch bei der Zustellbewegung des Bodenteils berücksichtigt wird. Darüber hinaus wäre es jedoch auch möglich, diesen Messwert bei der Steuerung und Regelung anderer Verfahrensschritte, wie etwa der Druckbeaufschlagung der Kunststoffvorformlinge zu berücksichtigen.

Weitere Vorteile und Ausführungsformen ergeben sich aus den beigefügten Zeichnungen.

Darin zeigen:
- Fig. 1: Eine grob schematische Darstellung einer Vorrichtung zum Umformen von Kunststoffvorformlingen zu Kunststoffbehältnissen;
- Fig. 2: Eine teilweise Darstellung einer Umformungsstation;
- Fig. 3: Eine Darstellung eines Hubmechanismus für ein Bodenteil;
- Fig. 4: Eine weitere Darstellung eines Hubmechanismus für ein Bodenteil;
- Fig.5: Eine weitere Darstellung des Hubmechanismus für das Bodenteil;
- Fig. 6: Eine Außenansicht des in den vorangegangenen Figuren gezeigten Hubmechanismus;
- Fig. 7: Einen Druckverlauf für die Beaufschlagung der Kunststoffvorformlinge; und
- Fig. 8: eine Veranschaulichung einer zeitlichen Korrektur der Bodenteilbewegung.

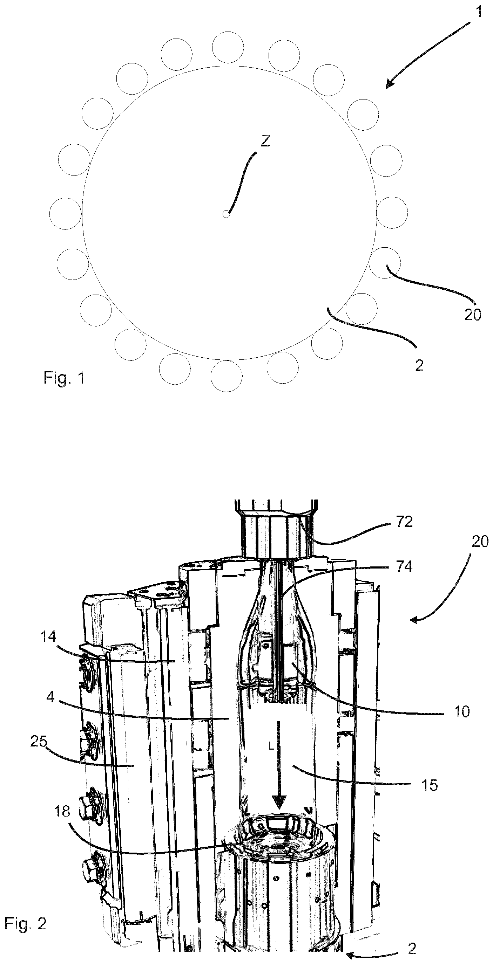

Fig. 1 zeigt eine schematische Darstellung einer erfindungsgemäßen Vorrichtung 1 zum Umformen von Kunststoffvorformlingen zu Kunststoffbehältnissen. Diese Vorrichtung weist dabei einen drehbaren Träger 2 auf, der bezüglich der Rotationsachse Z drehbar ist. An diesem Träger ist eine Vielzahl von Umformungsstationen 20 angeordnet.

Fig. 2 zeigt eine geschnittene Darstellung einer Umformungsstation bzw. Umformungseinrichtung 20. Hierbei ist ein erstes Blasformteil bzw. Seitenteil 4 dargestellt. Dieses Seitenteil ist über eine Trägerschale 14 an einem Blasformträgerteil 25 angeordnet. Ein zweites Blasformteil bzw. auch ein zweites Trägerteil ist in Fig. 2 nicht dargestellt. Das Bezugszeichen 18 kennzeichnet ein Bodenteil der Blasform, welches wie oben erwähnt abgesenkt und gehoben werden kann. Zu diesem Zweck ist der unten genauer beschriebene Antriebsmechanismus bzw. Hubmechanismus vorgesehen.

Das Bezugszeichen 15 kennzeichnet einen Hohlraum, innerhalb dessen die Kunststoffvorformlinge 10 zu Kunststoffflaschen expandierbar sind. Das Bezugszeichen 74 kennzeichnet eine Reckstange, welche durch eine Mündung der Behältnisse in diese einführbar ist, um diese in ihrer Längsrichtung L zu dehnen.

Das Bezugszeichen 72 kennzeichnet eine Beaufschlagungseinrichtung wie etwa eine Blasdüse, über welche den Kunststoffvorformlingen die Luft zum Expandieren zugeführt werden kann.

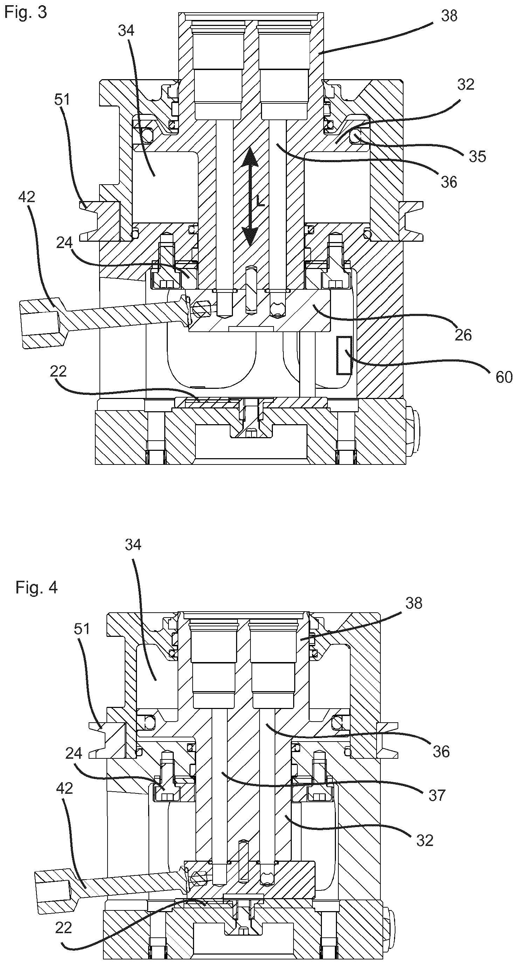

Fig. 3 zeigt eine erste Schnittdarstellung des Hubmechanismus zum Heben und Senken des Bodenteils. Dabei bezieht sich das Bezugszeichen 38 auf einen Träger, an dem ein Bestandteil des Bodenteils angeordnet werden kann. Dieser Träger ist dabei Bestandteil eines Kolbenelements 32, der hier in der Richtung L bewegbar ist, und zwar um einen vorgegebenen Hub. Zu diesem Zweck weist der Kolben eine Kolbenplatte 26 auf, welches gegenüber einem Kolbenraum 34, welcher auch als Druckkammer 34 fungiert, abgedichtet ist und sich gegenüber diesem in der besagten Längsrichtung bewegen kann. Das Bezugszeichen 35 kennzeichnet eine entsprechende Dichtungseinrichtung, welche hier beispielsweise als O-Ring ausgeführt sein kann.

Das Bezugszeichen 51 kennzeichnet ein Befestigungselement, in welches beispielsweise entsprechende Bereiche der Seitenteile eingreifen können, um die Blasform sicher abschließen zu können.

Das Bezugszeichen 22 kennzeichnet ein erstes Hubwegbegrenzungsmittel, welches den Hubweg des Kolbenelements 32 hier nach unten hin begrenzt. Dieses Hubwegbegrenzungsmittel ist dabei austauschbar bzw. in seiner Höhe veränderbar, sodass auch der Hubweg geändert werden kann. Dieses Hubwegbegrenzungsmittel dient als Anschlag für ein Plattenelement 26, welches Bestandteil des Kolbenelements 32 ist.

Das Bezugszeichen 24 kennzeichnet ein zweites Hubwegbegrenzungmittel, welches den Hubweg des Kolbenelements 32 auch nach oben hin begrenzt. Beide Hubwegbegrenzungsmittel können in ihrer Position entlang der Richtung L des Kunststoffvorformlings verändert werden, sodass auch insgesamt der Hubweg in beide Richtungen eingestellt werden kann.

Das Bezugszeichen 36 kennzeichnet einen Kanal zum Fördern eines Temperiermediums. Dieses Temperiermedium kann hier über einen Anschluss 42 zugeführt werden. Dieser Anschluss ist an dem Plattenelement 26 angeordnet und bewegt sich daher mit diesem mit.

Das Bezugszeichen 60 kennzeichnet grob schematisch eine Erfassungseinrichtung bzw. Sensoreinheit, welche Daten erfasst, welche für eine Bewegung des Kolbenelements 32 charakteristisch sind wie etwa eine Position des Kolbenelements, eine Bewegungsgeschwindigkeit, eine Beschleunigung und dergleichen.

Fig. 4 zeigt eine Darstellung entsprechend derjenigen aus Fig. 3. Bei der in Fig. 4 gezeigten Situation ist jedoch das Bodenteil bzw. dessen Träger 38 in einer unteren Position bzw. zurückgezogenen Position. Bei der in Fig. 3 gezeigten Situation ist das Bodenteil auf den Kunststoffvorformling bzw. das Kunststoffbehältnis zugestellt.

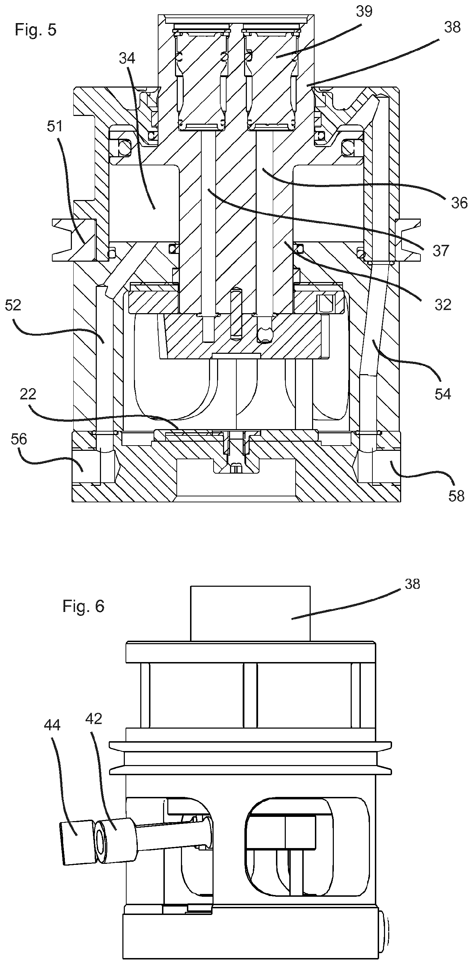

Figur 5 zeigt eine weitere Darstellung der erfindungsgemäßen Vorrichtung. Man erkennt hier einen Vorlauf 36 und einen Rücklauf 37, welche der Zuführung des Temperiermediums an das Bodenteil dienen. Die Bezugszeichen 39 kennzeichnen Kupplungseinrichtungen, mit denen das Bodenteil strömungstechnisch mit dem Träger 38 verbunden werden kann. Diese Kupplungen erlauben auch den Transport bzw. die Leitung des Temperiermediums.

Das Bezugszeichen 52 zeigt einen ersten Kanal, der zum Zuführen von Luft in den Kolbenraum 34 dient. Durch die Zuführung von Druckluft kann der Kolben 32 nach oben zugestellt werden. Das Bezugszeichen 54 kennzeichnet einen zweiten Luftkanal, der ebenfalls in den Kolbenraum 34 mündet, allerdings auf dessen Oberseite. Damit kann durch hier zugeführte Druckluft der Kolben 32 wieder nach unten zurückgestellt werden.

Das Bezugszeichen 56 kennzeichnet einen Anschluss zum Zuführen von Druckluft und auch das Bezugszeichen 58 kennzeichnet einen entsprechenden Anschluss. Über diese beiden Anschlüsse kann jeweils Druckluft zugeführt werden, um das Kolbenelement 32 zu heben und zu senken.

Figur 6 zeigt schließlich eine Gesamtdarstellung des erfindungsgemäßen Antriebsmechanismus. Hier sind die beiden Anschlüsse 42 und 44 erkennbar, die als Vorlauf und Rücklauf für das Temperiermedium dienen. Auch ist wieder der Träger 38 zu erkennen, an dem dann das (nicht gezeigte) Bodenteil angeordnet ist.

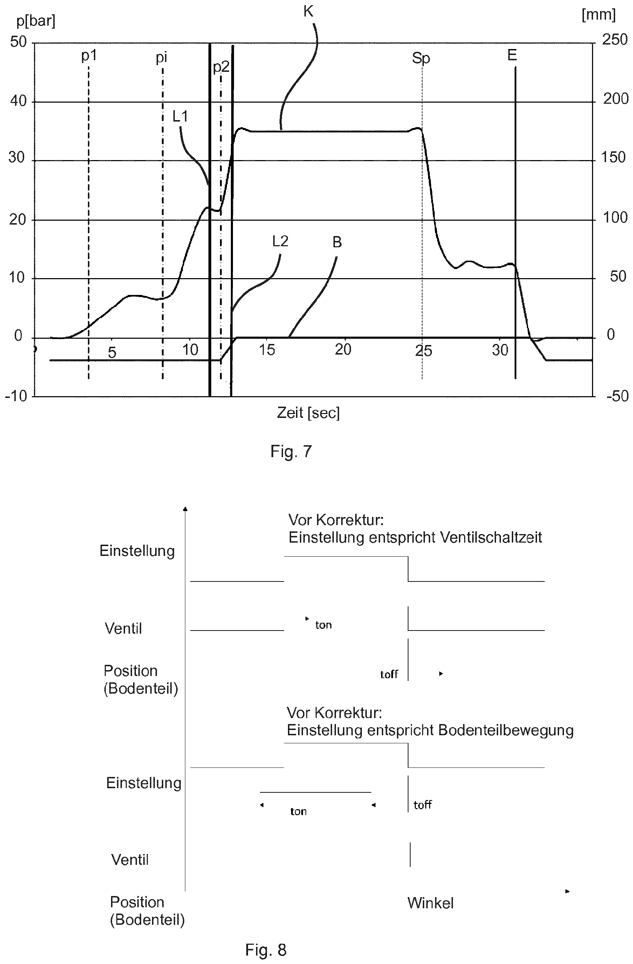

Fig. 7 zeigt eine Darstellung zur Veranschaulichung der einzelnen Druckverhältnisse bei der Beaufschlagung der Kunststoffvorformlinge. Das Bezugszeichen K bezieht sich auf eine Kurve, welche den Druckverlauf über die Zeit zeigt. Dabei beziehen sich die vertikalen Linien jeweils auf die Zeitpunkte, bei denen sich die jeweiligen Druckverhältnisse ändern, bzw. bei denen jeweils ein neues Druckniveau an den Kunststoffvorformling angelegt wird. Diese einzelnen Druckniveaus werden durch Schalten unterschiedlicher Ventile erreicht.

Das Bezugszeichen p1 kennzeichnet dabei einen ersten Druck bzw. Vorblasdruck. Das Bezugszeichen pi kennzeichnet einen zweiten Druck, der auch als Zwischenblasdruck bezeichnet wird. Das Bezugszeichen p2 kennzeichnet den dritten Druck, der auch als Fertigblasdruck bezeichnet wird. Das Bezugszeichen Sp kennzeichnet einen Spüldruck, der zeitlich nach dem Fertigblasdruck an das Behältnis angelegt wird. Schließlich kennzeichnet das Bezugszeichen E die Entlastung des ausgeformten Behältnisses, also den Zeitraum während dessen wieder Druck aus dem Behältnis entlassen wird.

Die zweite Kurve B kennzeichnet die Bewegung des Bodenteils. Man erkennt, dass dieses Bodenteil zeitgleich mit dem Beginn der Beaufschlagung durch den Fertigblasdruck p2 auf den Kunststoffvorformling zugestellt wird. Innerhalb eines durch die beiden vertikalen Linien L1 und L2 gebildeten Korrekturfensters kann der Zeitpunkt der Zustellung des Bodenteils verschoben werden.

Fig. 8 veranschaulicht die Korrektur der Zustellbewegung des Bodenteils. Dabei zeigt der obere Teil dieser Figur die Verhältnisse vor einer Korrektur. Hier fallen ein Einstellungszeitpunkt und der Schaltzeitpunkt zusammen. Nach einer gewissen zeitlichen Verzögerung wird auch das Bodenteil zugestellt. Damit ist jedoch die Bewegung des Bodenteils nicht an die gewünschte Grundeinstellung angepasst.

Bei der in der unteren Teilfigur gezeigten Situation wurde eine Korrektur vorgenommen. Hier wurde das Schalten des Ventils früher vorgenommen. Man erkennt, dass in dieser Situation die Bewegung des Bodenteils den gewünschten Einstellungswerten entspricht.

### Bezugszeichenliste

- 1: Vorrichtung zum Umformen von Kunststoffvorformlingen zu Kunststoffbehältnissen
- 2: drehbarer Träger
- 4: Blasformteil
- 10: Kunststoffvorformlinge
- 14: Trägerschale
- 15: Hohlraum
- 18: Bodenteil der Blasform
- 20: Umformungsstationen
- 22: erste Hubwegbegrenzungsmittel
- 24: zweites Hubwegbegrenzungsmittel
- 25: Blasformträgerteil
- 26: Plattenelement
- 32: Kolbenelement
- 34: Kolbenraum, Druckkammer
- 36: Kanal zum Fördern eines Temperiermediums, Vorlauf
- 37: Rücklauf
- 38: Träger
- 39: Kupplungseinrichtungen
- 42: Anschluss
- 44: Anschluss
- 51: Befestigungselement
- 52: erster LuftKanal
- 54: zweiter Luftkanal
- 56: Anschluss zum Zuführen von Druckluft
- 58: Anschluss zum Zuführen von Druckluft
- 60: Erfassungseinrichtung bzw. Sensoreinheit
- 72: Beaufschlagungseinrichtung
- 74: Reckstange
- L: Längsrichtung
- Z: Rotationsachse
- p1: erster Druck, Vorblasdruck
- pi: zweiter Druck, Zwischenblasdruck
- p2: dritter Druck, Fertigblasdruck
- Sp: Spüldruck
- E: Entlastung
- K: Blaskurve
- B: Bewegung des Bodenteils

## Patentansprüche

1. Umformungseinrichtung (20) zum Umformen von Kunststoffvorformlingen zu Kunststoffflaschen, wobei die Umformungseinrichtung (20) eine Blasform mit einem ersten Seitenteil (4), einem zweiten Seitenteil (6) und einem Bodenteil (18) aufweist, wobei diese Seitenteile sowie das Bodenteil (18) einen Hohlraum (15) ausbilden, innerhalb dessen die Kunststoffvorformlinge (10) zu den Kunststoffflaschen umformbar sind, wobei das Bodenteil (18) in einem geschlossenen Zustand der Blasform gegenüber den Seitenteilen (4) bewegbar ist, wobei die Umformungseinrichtung (20) eine Antriebseinrichtung aufweist, um das Bodenteil (18) gegenüber den Seitenteilen (4, 6) zu bewegen, wobei die Antriebseinrichtung bevorzugt ein bewegliches Kolbenelement (32) aufweist, welches entlang eines vorgegebenem Hubwegs bewegbar ist,
**dadurch gekennzeichnet, dass**
die Vorrichtung ein erstes Hubwegbegrenzungsmittel (22, 24) aufweist, welches den Hubweg des Bodenteils (18) und/oder des Kolbenelements (32) in einer ersten Richtung begrenzt, wobei dieses Hubwegbegrenzungsmittel (22, 24) verstellbar ist, um den Hubweg zu verändern.

2. Umformungseinrichtung (20) nach Anspruch 1,
**dadurch gekennzeichnet, dass**
die Vorrichtung eine Druckkammer (34) aufweist, um den Kolben mit einem Druckmedium zu beaufschlagen und das Hubwegbegrenzungsmittel (22, 24) außerhalb dieser Druckkammer (34) angeordnet ist.

3. Umformungseinrichtung (20) nach Anspruch 2,
**dadurch gekennzeichnet, dass**
das Hubwegbegrenzungsmittel (22, 24) unterhalb der Druckkammer (34) angeordnet ist.

4. Umformungseinrichtung (20) nach wenigstens einem der vorangegangenen Ansprüche,
**dadurch gekennzeichnet, dass**
das Hubwegbegrenzungsmittel (22, 24) in der Bewegungsrichtung (L) des Kolbenelements (32) einstellbar ist.

5. Umformungseinrichtung (20) nach wenigstens einem der vorangegangenen Ansprüche,
**dadurch gekennzeichnet, dass**
die Umformungseinrichtung (20) wenigstens einen ersten Temperiermittelanschluss (42) aufweist, um das Bodenteil (18) mittels eines fließfähigen Temperiermittels zu temperieren.

6. Umformungseinrichtung (20) nach wenigstens einem der vorangegangenen Ansprüche,
**dadurch gekennzeichnet, dass**
die Umformungseinrichtung (20) eine Erfassungseinrichtung (60) aufweist, welche dazu geeignet und bestimmt ist, wenigstens einen Messwert aufzunehmen, der für die Bewegung des Bodenteils (18) charakteristisch ist.

7. Umformungseinrichtung (20) nach wenigstens einem der vorangegangenen Ansprüche,
**dadurch gekennzeichnet, dass**
die Umformungseinrichtung (20) ein zweites Hubwegbegrenzungsmittel (24) aufweist, welches die Hubbewegung des Kolbenelements (32) in einer zweiten Richtung begrenzt, wobei bevorzugt dieses Hubwegbegrenzungsmittel verstellbar ist, um den Hubweg zu verändern.

8. Umformungseinrichtung (20) nach wenigstens einem der vorangegangenen Ansprüche,
**dadurch gekennzeichnet, dass**
eine Antriebseinrichtung eine Drosseleinrichtung aufweist, um die Bewegung des Bodenteils (18) zu drosseln.

9. Verfahren zum Umformen von Kunststoffvorformlingen (10) zu Kunststoffflaschen mit den Schritten:
- Eingeben eines Kunststoffvorformlings (10) in eine Blasform, wobei diese Blasform wenigstens zwei Seitenteile (4) aufweist, sowie ein Bodenteil (18), welche gemeinsam einen Hohlraum (15) begrenzen, innerhalb dessen der Kunststoffvorformling (10) expandierbar ist;
- Beaufschlagung des Kunststoffvorformlings (10) mit einem ersten Druck (p1);
- Beaufschlagung des Kunststoffvorformlings mit einem zweiten Druck (pi), der von dem ersten Druck (p1) abweicht und bevorzugt größer ist als der erste Druck (p1);
- Beaufschlagung des Kunststoffvorformlings mit einem dritten Druck (p2), der von dem zweiten Druck (pi) abweicht und bevorzugt größer ist als der zweite Druck (pi), wobei das Bodenteil (18) wenigstens einmal während des Expansionsvorgangs auf den Kunststoffvorformling (10) zugestellt wird,
**dadurch gekennzeichnet, dass**
ein erstes Hubwegbegrenzungsmittel (22) vorgesehen ist, welches die Hubbewegung des Bodenteils (18) in einer ersten Richtung begrenzt, wobei dieses Hubwegbegrenzungsmittel (22) verstellbar ist, um den Hubweg zu verändern.

10. Verfahren nach Anspruch 9,
**dadurch gekennzeichnet, dass**
ein von dem Kolbenelement (32) und/oder dem Bodenteil (18) zurückgelegter Weg bestimmt wird.

11. Verfahren nach einem der vorangegangenen Ansprüche,
**dadurch gekennzeichnet, dass**
ein Verfahrprofil des Bodenteils (18) bestimmt wird.

12. Verfahren nach wenigstens einem der vorangegangenen Ansprüche,
**dadurch gekennzeichnet, dass**
auf Basis des aufgenommenen Messwerts die Zustellbewegung des Bodenteils auf den Kunststoffvorformling gesteuert und/oder geregelt wird.

## Claims

1. A forming unit (20) for forming plastic preforms into plastic bottles, wherein the forming unit (20) comprises a blow mould having a first lateral portion (4), a second lateral portion (6) and a bottom portion (18), wherein said lateral portions as well as the bottom portion (18) form a cavity (15), within which the plastic preforms (10) can be formed into the plastic bottles, wherein the bottom portion (18) can be moved relative to the lateral portions (4) in a closed condition of the blow mould, wherein the forming unit (20) comprises a drive unit in order to move the bottom portion (18) relative to the lateral portions (4, 6), wherein the drive unit preferably has a movable piston element (32) which is movable along a predefined stroke path,
**characterised in that**
the apparatus has a first stroke path limiting means (22, 24) that limits the stroke path of the bottom portion (18) and/or of the piston element (32) in a first direction, wherein this stroke path limiting means (22, 24) is adjustable in order to modify the stroke path.

2. The forming unit (20) as claimed in claim 1,
**characterised in that**
the apparatus has a pressure chamber (34) in order to apply a pressure medium onto the piston, and the stroke path limiting means (22, 24) is arranged outside of this pressure chamber (34).

3. The forming unit (20) as claimed in claim 2,
**characterised in that**
the stroke path limiting means (22, 24) is arranged below the pressure chamber (34).

4. The forming unit (20) as claimed in at least one of the preceding claims,
**characterised in that**
the stroke path limiting means (22, 24) can be adjusted in the movement direction (L) of the piston element (32).

5. The forming unit (20) as claimed in at least one of the preceding claims,
**characterised in that**
the forming unit (20) has at least one tempering agent port (42) in order to temper the bottom portion (18) by means of a flowable tempering agent.

6. The forming unit (20) as claimed in at least one of the preceding claims,
**characterised in that**
the forming unit (20) has a detection unit (60) that is suitable and intended to receive at least one measurement value wich is characteristic of the movement of the bottom portion (18).

7. The forming unit (20) as claimed in at least one of the preceding claims,
**characterised in that**
the forming unit (20) has a second stroke path limiting means (24) that limits the stroke movement of the piston element (32) in a second direction, wherein preferably said stroke path limiting means is adjustable in order to modify the stroke path.

8. The forming unit (20) as claimed in at least one of the preceding claims,
**characterised in that**
a drive unit has a throttle unit in order to throttle the movement of the bottom portion (18).

9. A method for forming plastic preforms (10) into plastic containers, comprising the following steps:
- inserting a plastic preform (10) into a blow mould, wherein said blow mould has at least two lateral portions (4) as well as a bottom portion (18), which together limit a cavity (15), within which the plastic preform (10) is expandable;
- applying a first pressure (p1) onto the plastic preform (10);
- applying a second pressure (pi) onto the plastic preform, which deviates from the first pressure (1) and is preferably greater than the first pressure (p1);
- applying a third pressure (p2) onto the plastic preform, which deviates from the second pressure (pi) and is preferably greater than the second pressure (pi), wherein the bottom portion (18) is being fed to the plastic preform (10) at least once during the expansion process,
**characterised in that**
a first stroke path limiting means (22) is provided, which limits the stroke movement of the bottom portion (18) in a first direction, wherein this stroke path limiting means (22) is adjustable in order to modify the stroke path.

10. The method as claimed in claim 9,
**characterised in that**
a path travelled by the piston element (32) and/or the bottom portion (18) is determined.

11. The method as claimed in any one of the preceding claims,
**characterised in that**
a traversing profile of the bottom portion (18) is determined.

12. The method as claimed in at least one of the preceding claims,
**characterised in that**
on the basis of the received measurement value, the feeding movement of the bottom portion towards the plastic preform is controlled and/or regulated.

## Revendications

1. Équipement de formage (20) destiné à former des préformes en plastique pour en faire des bouteilles en plastique, dans lequel l'équipement de formage (20) présente un moule de soufflage avec une première partie latérale (4), une seconde partie latérale (6) et une partie de fond (18), dans lequel ces parties latérales ainsi que la partie de fond (18) forment un espace creux (15) à l'intérieur duquel les préformes en plastique (10) peuvent être formées pour en faire des bouteilles en plastique, dans lequel la partie de fond (18) est mobile par rapport aux parties latérales (4) dans un état fermé du moule de soufflage, dans lequel l'équipement de formage (20) présente un équipement d'entraînement pour déplacer la partie de fond (18) par rapport aux parties latérales (4, 6), dans lequel l'équipement d'entraînement présente de préférence un élément de piston (32) mobile, lequel est mobile le long d'une course prédéfinie,
**caractérisé en ce que**
le dispositif présente un premier moyen de délimitation de course (22, 24), lequel délimite la course de la partie de fond (18) et/ou de l'élément de piston (32) dans une première direction, dans lequel ce moyen de délimitation de course (22, 24) peut être réglé pour modifier la course.

2. Équipement de formage (20) selon la revendication 1,
**caractérisé en ce que**
le dispositif présente une chambre de pression (34) pour solliciter le piston avec un milieu de pression et le moyen de délimitation de course (22, 24) est agencé à l'extérieur de cette chambre de pression (34).

3. Équipement de formage (20) selon la revendication 2,
**caractérisé en ce que**
le moyen de délimitation de course (22, 24) est agencé en-dessous de la chambre de pression (34).

4. Équipement de formage (20) selon au moins l'une des revendications précédentes,
**caractérisé en ce que**
le moyen de délimitation de course (22, 24) peut être réglé dans la direction de déplacement (L) de l'élément de piston (32).

5. Équipement de formage (20) selon au moins l'une des revendications précédentes,
**caractérisé en ce que**
l'équipement de formage (20) présente au moins un premier raccord de régulation de température (42) pour réguler la température de la partie de fond (18) au moyen d'un moyen de régulation de température susceptible de s'écouler.

6. Équipement de formage (20) selon au moins l'une des revendications précédentes,
**caractérisé en ce que**
l'équipement de formage (20) présente un équipement de saisie (60), lequel est adapté et déterminé pour enregistrer au moins une valeur mesurée qui est caractéristique du déplacement de la partie de fond (18).

7. Équipement de formage (20) selon au moins l'une des revendications précédentes,
**caractérisé en ce que**
l'équipement de formage (20) présente un second moyen de délimitation de course (24), lequel délimite le déplacement de course de l'élément de piston (32) dans une seconde direction, dans lequel de préférence ce moyen de délimitation de course peut être réglé pour modifier la course.

8. Équipement de formage (20) selon au moins l'une des revendications précédentes,
**caractérisé en ce que**
un équipement d'entraînement présente un équipement d'étranglement pour brider le déplacement de la partie de fond (18).

9. Procédé destiné à former des préformes en plastique (10) pour en faire des bouteilles en plastique avec les étapes de :
- introduction d'une préforme en plastique (10) dans un moule de soufflage, dans lequel ce moule de soufflage présente au moins deux parties latérales (4) ainsi qu'une partie de fond (18), lesquelles délimitent ensemble un espace creux (15) à l'intérieur duquel la préforme en plastique (10) peut être dilatée ;
- sollicitation de la préforme en plastique (10) avec une première pression (p1) ;
- sollicitation de la préforme en plastique avec une deuxième pression (pi), qui diffère de la première pression (p1) et est de préférence plus élevée que la première pression (p1) ;
- sollicitation de la préforme en plastique avec une troisième pression (p2), qui diffère de la deuxième pression (pi) et est de préférence plus élevée que la deuxième pression (pi), dans lequel la partie de fond (18) est présentée sur la préforme en plastique (10) au moins une fois pendant le processus de dilatation,
**caractérisé en ce que**
un premier moyen de délimitation de course (22) est prévu, lequel délimite le déplacement de course de la partie de fond (18) dans une première direction, dans lequel ce moyen de délimitation de course (22) peut être réglé pour modifier la course.

10. Procédé selon la revendication 9,
**caractérisé en ce que**
un trajet parcouru par l'élément de piston (32) et/ou la partie de fond (18) est déterminé.

11. Procédé selon l'une des revendications précédentes,
**caractérisé en ce que**
un profil de déplacement de la partie de fond (18) est déterminé.

12. Procédé selon l'une des revendications précédentes,
**caractérisé en ce que**
sur la base de la valeur mesurée enregistrée, le déplacement pour présenter la partie de fond jusque sur la préforme en plastique est commandé et/ou réglé.
